**Europäisches Patentamt**

**European Patent Office**

**Office européen des brevets**

(11) Veröffentlichungsnummer: **0 193 800**
**A2**

(12) **EUROPÄISCHE PATENTANMELDUNG**

(21) Anmeldenummer: **86102202.8**

(22) Anmeldetag: **20.02.86**

(51) Int. Cl.⁴: **H 01 M 4/02**

(30) Priorität: **26.02.85 DE 3506659**

(43) Veröffentlichungstag der Anmeldung: **10.09.86**
**Patentblatt 86/37**

(84) Benannte Vertragsstaaten: **BE DE FR GB NL**

(71) Anmelder: **BASF Aktiengesellschaft,**
**Carl-Bosch-Strasse 38, D-6700 Ludwigshafen (DE)**

(72) Erfinder: **Muenstedt, Helmut, Dr., An dem Altenbach 41,**
**D-6706 Wachenheim (DE)**
Erfinder: **Gebhard, Helmut, Bismarckstrasse 9,**
**D-6737 Boehl-Iggelheim (DE)**

(54) **Verbundelektrode.**

(57) Verbundelektrode, deren aktives Elektrodenmaterial ein elektrochemisch be- und entladbares Polymeres enthält, das mit einem Ableiter verbunden ist, wobei der Klebstoff feinteilige elektrisch leitfähige Substanzen enthält.

EP 0 193 800 A2

## Verbundelektrode

Die Erfindung betrifft eine Verbundelektrode, deren aktives Elektrodenmaterial ein elektrochemisch oxidierbares und/oder reduzierbares Polymeres enthält und einen damit verbundenen Ableiter.

In der EP-A-36 118 und EP-A-49 970 werden leichte Batterien hoher Energie- und Leistungsdichte beschrieben, die als elektrodenaktives Material der Elektroden ein elektrisch hochleitfähiges, p- oder n-dotiertes konjugiertes Polymer, insbesondere Polyacetylen, enthalten. Die konjugierten Polymeren lassen sich mit den im Elektrolyt enthaltenen ionischen oder ionisierbaren Verbindungen reversibel elektrochemisch dotieren und entdotieren und so in Abhängigkeit von dem Dotierungsgrad in verschiedene Oxidations- oder Reduktionsstufen überführen. In einer typischen und vorteilhaften Ausführungsform enthalten diese Batterien z.B. eine Lithium-Anode und eine Kathode aus p-dotiertem Polyacetylen. Die Elektrolytsalze, wie z.B. Lithiumperchlorat, sind vorzugsweise in organischen Elektrolytlösungsmitteln wie linearen und cyclischen Ethern, Propylencarbonat oder Acetonitril gelöst.

Als Elektrodenmaterial für derartige Batterien sind neben Polyacetylen insbesondere elektrisch dotierte Homo- und Copolymerisate von Verbindungen aus der Klasse der Pyrrole, Thiophene und Furane geeignet.

Zur flächenhaft vollständigen Be- und Entladung der oxidierbaren und reduzierbaren Polymere ist ein möglichst guter Kontakt zwischen dem Elektrodenmaterial und den Ableiter anzustreben. Die Ableiter bestehen zweckmäßigerweise aus Metall. Ableiter und Elektrodenmaterial wurden meist mechanisch miteinander verbunden. Dies hat jedoch den Nachteil, daß die Verbindung mitunter unvollkommen ist, so daß die optimale Leitfähigkeit nicht gewährleistet ist. Klemm- und Preßverbindungen erfordern kostspielige Ausführungsformen. Nach einer anderen Methode wird auf das Ableitermaterial das elektrisch leitfähige Polymere direkt aufpolymerisiert. Diese Methode ist jedoch aufwendig und erlaubt es nicht, aus vorgefertigten Polymermaterial Elektroden herzustellen.

Aufgabe der vorliegenden Erfindung sind Verbundelektroden, die in technisch einfacher Weise herstellbar sind und in denen zwischen dem aktiven Elektrodenmaterial und dem Ableiter eine mechanisch feste und leitfähige Bindung besteht, so daß eine ausreichende elektrische Leitfähigkeit gewährleistet ist.

vG/P

Es wurde nun gefunden, daß diese Aufgabe durch eine Verbundelektrode gelöst wird, deren aktives Elektrodenmaterial ein elektrochemisch be- und entladbares Polymeres enthält und einen damit mittels eines Klebstoffes verbundenen Ableiter, wobei der Klebstoff eine darin eingelagerte feinteilige elektrisch leitfähige Substanz enthält.

Gegenstand der Erfindung sind des weiteren spezielle Ausgestaltungsformen der Verbundelektroden entsprechend der nachfolgenden detaillierten Beschreibung.

Die erfindungsgemäßen Verbundelektroden haben den Vorteil, daß die Elektrolytsysteme, die man im Zusammenhang mit elektrochemisch oxidierbaren und reduzierbaren Polymeren verwendet, die Klebstoffverbindung zwischen Polymeren und Ableiter nicht lösen. Die Verbindung ist außerdem elastisch genug, um eine Volumenveränderung beim Be- und Entladen der Elektroden auszugleichen, so daß es nicht zu einem Auflösen des Elektrodenmaterials beim Be- und Entladen kommt. Es hat sich außerdem als vorteilhaft erwiesen, daß beim Herstellen der Verbindung zwischen Elektrodenmaterial und Ableiter mittels eines Klebstoffes keine thermische Belastung erfolgen muß, so daß es nicht zu einer Schädigung des elektroaktiven Elektrodenmaterials bei der Herstellung der Verbundelektrode kommt.

Die erfindungsgemäßen Verbundelektroden enthalten als elektrodenaktives Material elektrochemisch be- und entladbare Polymere, welche im beladenen Zustand eine elektrische Leitfähigkeit größer $10^{-2} \Omega^{-1} cm^{-1}$, insbesondere gleich oder größer $10^{0} \Omega^{-1} cm^{-1}$ besitzt. Hierzu gehören insbesondere die elektrochemisch p- oder n-dotierbaren Polymeren mit konjugierten Doppelbindungen..

Unter Polymeren mit konjugierten Doppelbindungen werden dabei solche Polymeren verstanden, die konjugierte ungesättigte Bindungen entlang ihrer Polymerhauptkette aufweisen. Hierzu gehören alle bekannten dotierten oder dotierbaren konjugierten Polymeren, die elektrochemisch be- und entladbar sind, wie sie in der Literatur und insbesondere der EP-A-36 118, der EP-A-49 970 sowie der EP-A-58 469, beschrieben sind.

Aus der Gruppe der dotierten bzw. dotierbaren konjugierten Polymeren sind als elektrodenaktives Material unter anderem die Acetylenpolymerisate bevorzugt, wozu insbesondere Polyacetylen selbst, aber auch die bekannten substituierten Polyacetylene oder Acetylen-Copolymerisate gehören. Die Acetylen-Polymerisate können für den Einsatz als elektrodenaktives Material mit Elektronenakzeptoren p-dotiert oder mit Elektronendonatoren n-dotiert sein.

Unter den dotierten, elektrochemisch be- und entladbaren konjugierten Polymeren haben sich insbesondere auch die Polymeren der Verbindungen aus der Klasse der 5-gliedrigen heterocyclischen Verbindungen mit konjugiertem $\pi$-Elektronensystem, die Stickstoff, Schwefel oder Sauerstoff als Heteroatom enthalten als sehr vorteilhaftes Elektrodenmaterial erwiesen. Unter derartigen Verbindungen aus der Klasse der 5-gliedrigen heterocyclischen Verbindungen werden im Rahmen dieser Erfindung Verbindungen aus der Klasse der Pyrrole, der Thiophene und der Furane verstanden.

Verbindungen aus der Klasse der Pyrrole sind sowohl das unsubstituierte Pyrrol selber als auch die substituierten Pyrrole, wie die N-Alkylpyrrole, N-Arylpyrrole, die an den C-Atomen monoalkyl- oder dialkylsubstituierten Pyrrole und die an den C-Atomen monohalogen- oder dihalogensubstituierten Pyrrole. Bei der Herstellung der erfindungsgemäßen Copolymeren können die Pyrrole allein oder in Mischung miteinander eingesetzt werden, so daß die Copolymere ein oder mehrere verschiedene Pyrrole eingebaut enthalten können. Vorzugsweise leiten sich die wiederkehrenden Pyrrol-Einheiten in den Copolymeren im wesentlichen von unsubstituiertem Pyrrol selber ab. Werden substituierte Pyrrole bei der Herstellung eingesetzt, sind hierfür die 3,4-Dialkylpyrrole, insbesondere solche mit 1 bis 4 C-Atomen im Alkylrest, wie 3,4-Dimethylpyrrol und 3,4-Diethylpyrrol, bevorzugt.

Verbindungen aus der Klasse der Thiophene sind das unsubstituierte Thiophen selbst, das 2-, oder 3-, Methylthiophen, das 2-, 3-, Ethylthiophen oder andere alkylsubstituierte Thiophene, ebenso die 2fach mit Alkyl substituierten Thiophene, wie 2,3-Diethylthiophen oder auch die chlorsubstituierten Thiophene. Ebenso kommen Phenylthiophene, wie 2-Phenylthiophen oder das 3-Benzylthiophen in Frage.

Verbindungen aus der Klasse der Furane sind sowohl das unsubstituierte Furan selbst als auch die substituierten Furane, wie Alkylfurane, z.B. 3-Methyl-, 2-Ethyl- oder 3-Ethyl-, außerdem 2,2-Dimethyl- oder 2,3-Diethyl-Furan, sowie chlorsubstituierte Furane. Bevorzugt ist das unsubstituierte Furan selbst.

Die obengenannten 5-gliedrigen heterocyclischen Verbindungen mit konjugiertem $\pi$-Elektronensystem können aber auch mit bis zu 20 Gew.-% anderen mit diesen Verbindungen copolymerisierbaren Verbindungen copolymerisiert werden. Solche Verbindungen sind z.B. das Thiazol, das Oxazol, das Imidazol. Weiterhin kommen als Comonomere Aminophenanthren, Benzidin, Semidin, Aminocrysen, Aminocarbazol sowie Anilin und/oder p-Phenylendiamin in Frage.

Zur Herstellung der Homo- und Copolymeren der Verbindungen aus der Klasse der 5-gliedrigen Heterocyclen können die Monomeren, das sind die Pyrrole, Thiophene oder Furane und gegebenenfalls die Comonomeren, in einem Lösungsmittel in Gegenwart eines geeigneten Leitsalzes anodisch oxidiert und dabei polymerisiert werden.

Neben den dotierten und/oder elektrochemisch be- und entladbaren konjugierten Polymeren haben sich als aktives Elektrodenmaterial insbesondere auch solche elektrisch leitfähigen Polymeren mit einer elektrischen Leitfähigkeit größer als $10^{-2} \Omega^{-1}$ cm$^{-1}$ als besonders vorteilhaft erwiesen, die elektrochemisch oxidierbare und/oder reduzierbare Redox-Gruppen mit definierter Struktur eingebaut enthalten, die mindestens zwei stabile und vorzugsweise reversibel ineinander überführbare Oxidationsstufen auszubilden vermögen. Derartige als Elektrodenmaterial für elektrochemische Zellen oder Batterien besonders gut geeignete Polymere sind beispielsweise in der DE-A-32 44 900 ausführlich beschrieben, worauf in diesem Zusammenhang ausdrücklich verwiesen wird. Zu diesen elektrisch leitfähigen Redox-Polymeren gehören p- oder n-dotierte Polymere, welche die Redox-Gruppen als Seitengruppen an der Polymerhauptkette gebunden enthalten. Bei diesen Redox-Gruppen handelt es sich vornehmlich um solche Gruppen, die chinoide Strukturen auszubilden vermögen, wobei als Redox-Gruppen 1,9-disubstituierte Phenalenreste sehr vorteilhaft sind.

Die elektrisch leitfähigen, elektrochemisch be- und entladbaren Polymeren können in jeder beliebigen geeigneten Form als aktives Elektrodenmaterial in den erfindungsgemäßen Verbundelektroden eingesetzt werden. Beispielsweise ist es möglich, diese Polymeren in Form von selbsttragenden Filmen oder Folien oder von geschäumten offenzelligen Formkörpern oder Schaumstoffen zu verwenden. Dies empfiehlt sich z.B. insbesondere dann, wenn diese Polymeren stabile, feste, selbsttragende Filme oder Folien zu bilden vermögen. In diesem Fall besteht die betreffende Elektrode aus den elektrisch leitfähigen, elektrochemisch oxidierbaren und/oder reduzierbaren Polymeren.

Gleichermaßen können die Polymeren zum Einsatz als Elektrodenmaterial auf ein Substrat aufgebracht werden, beispielsweise indem man Filme oder Folien dieser Polymeren auf das Substrat auflaminiert oder aufkaschiert oder indem man das Substrat mit dem Polymeren pulverbeschichtet. Als Substrate können dabei einerseits inerte, indifferente Trägermaterialien dienen, z.B. Filme oder Folien aus üblichen unter den Betriebsbedingungen der elektrochemischen Zelle oder Batterie stabilen Polymeren, insbesondere auch Gewebe, Vliese etc. aus organischen oder anorganischen, elektrisch nicht-leitenden Materialien, z.B. Vliese aus Glaswolle oder dergleichen, die gleichzeitig als Separatoren oder Diaphragmen dienen können.

Ferner können die elektrisch leitfähigen, elektrochemisch be- und entladbaren Polymeren zur Herstellung der Elektroden in Form von gesinterten oder verpreßten Pulvern, beispielsweise als Sinter- oder Preßplättchen, eingesetzt werden. Bei der Herstellung von Preß- oder Sinterelektroden können die hierbei üblichen und gebräuchlichen Zusatzstoffe mitverwendet werden, wie z.B. Bindemittel, Pigmente, Ruß, inerte Metalle oder Träger- oder Matrixmaterialien, wie z.B. andere polymere Stoffe. Diese Zusatzstoffe sind in den Elektrodenmaterialien im allgemeinen in Mengen unter 50 Gew.%, bezogen auf die gesamte Elektrode, enthalten, wobei für die Elektrodenherstellung vorzugsweise ohne diese Zusatzstoffe gearbeitet wird. Es ist auch möglich, die elektrisch leitfähigen, elektrochemisch be- und entladbaren Polymeren in Netz- oder Korbelektroden einzusetzen.

Die mit dem aktiven Elektrodenmaterial verbundenen Ableiter bestehen zweckmäßig aus Metall, beispielsweise aus einem Leichtmetall, das im verwendeten Potentialbereich stabil ist. Bevorzugt unter den Leichtmetallen oder Leichtmetall-Legierungen sind solche aus Aluminium oder Aluminium enthaltenden Legierungen. Die Ableiter haben zweckmäßig die Form von Folien, deren Breite der der Elektrode entspricht. Die Ableiter werden so mit dem Elektrodenmaterial verbunden, daß sie sich mit diesen überlappen. Zwischen Ableiter und Elektrodenmaterial ist eine Klebstoffschicht angeordnet. Als Klebstoff eignen sich solche, die eine feste Verbindung zwischen Polymeren und aktivem Elektrodenmaterial ermöglichen. Derartige Klebstoffe sind bekannt. Bevorzugt sind Klebstoffe auf Basis Polyisobutylen und Carboxylgruppen enthaltenden Ethylenpolymerisaten. Man verwendet zweckmäßig Polyisobutylen im Molekulargewichtsbereich von 40.000 bis 200.000 g/mol.

Die Klebstoffschicht kann vorzugsweise ein Carboxylgruppen enthaltendes Ethylenpolymerisat enthalten, worin feinteilig elektrisch leitfähige Substanzen eingebettet sind. Man verwendet zweckmäßig solche Polymerisate, deren Meltindex zwischen 6 und 8 g/10 min liegt. Unter Carboxylgruppen enthaltenden Ethylenpolymerisaten werden Copolymerisate des Ethylens verstanden, die beispielsweise Acrylsäure oder Methacrylsäure einpolymerisiert enthalten. Es können auch weitere Monomere, z.B. Acrylsäureester, einpolymerisiert sein. Die Herstellung derartiger Carboxylgruppen enthaltender Copolymerisate ist beispielsweise in der DB-Patentschrift 15 20 493 beschrieben. Besonders eignen sich Copolymerisate, die neben Ethylen, Acryl- oder Methacrylsäure deren tert.-Butylester einpolymerisiert enthalten, wie sie beispielsweise in der DB-Patentschrift 21 19 047 beschrieben sind.

Es können aber auch Pfropfpolymerisate der Acryl- und Methacrylsäure auf Ethylenpolymerisaten Verwendung finden.

Es ist erfindungswesentlich, daß diese Klebstoffschicht feinteilige elektrisch leitfähige Substanzen eingebettet enthält. Die feinteiligen Substanzen sind im verwendeten Potentialbereich stabil. Bevorzugt sind Ruß oder Graphit, es können auch feinteilige Metalle verwendet werden, jedoch empfiehlt es sich, das Metall des Ableitermaterials zu verwenden, damit sich kein elektrochemisches Element zwischen Ableiter und eingelagertem Metall ausbildet. Das eingelagerte Material hat zweckmäßig eine Teilchengröße, die im Bereich von 20 bis 100 µm liegt. Man mischt Klebstoff mit der leitfähigen Substanz in einem Verhältnis zwischen 10 und 50 % Substanz auf 100 % der Mischung.

Der Klebstoff mit dem eingelagerten leitfähigen Material kann in geschmolzener Form auf die zu verbindenden Elektrodenmaterialien und Ableitmaterialien aufgebracht werden. Meistens ist es zweckmäßig, den Klebstoff in Form von Lösungen zu verwenden. Die Lösungen enthalten zweckmäßig 50 bis 95 % Lösungsmittel, bezogen auf den Klebstoff.

Zum Verbinden des Elektrodenmaterials mit dem Ableiter wird zunächst der Klebstoff auf das Elektrodenmaterial, den Ableiter oder auf beide Teile aufgebracht. Es wird unter Druck verbunden und nach dem Abdifundieren des Lösungsmittels die Druckverbindung gelöst. Verwendet man schmelzbare Klebstoffe, so wird der Klebstoff in Form der Schmelze auf das Elektrodenmaterial bzw. die Ableiter aufgebracht, die Verbindung unter Druck hergestellt und nach dem Erkalten des Material wieder gelöst.

Beispiel 1

Es wird eine Lösung aus 10 Gew.-Teilen Polyisobutylen des Molekulargewichts 40 000 g/mol in 90 Gew.-Teilen Toluol hergestellt. In diese Lösung werden 30 Gew.-Teile Ruß, bezogen auf das Polyisobutylen, eingearbeitet der eine mittlere Teilchengröße von 50 µm hat. Diese Lösung wird auf ein Aluminiumblech aufgebracht, das anschließend mit einer Polypyrrolfolie verbunden wird. Es wurde unter einem Druck von 10 bar eine Verbindung hergestellt und nach dem Abdiffundieren des Lösungsmittels gelöst. Der Verbund aus Aluminium und rußgefülltem Polyisobutylen besitzt eine Durch- gangsleitfähigkeit von $10^{-1}$ S/cm und stellt damit eine gut leitende Verbindung zwischen elektrochemisch aktiver Polymerfolie und metallischem Ableiter dar. Beim Zyklisieren der Verbundelektrode in einem Elektrolyten aus Propylencarbonat und $LiClO_4$ wird auch nach einigen hundert Zyklen kein Ablösen der Folien beobachtet.

Beispiel 2

Es wird eine Lösung aus 5 Gew.-Teilen Polyisobutylen des Molekulargewichts 85 000 g/mol in 95 Gew.-Teilen Leichtbenzin hergestellt. In diese Lösung werden 30 Gew.-Teile Leitruß, bezogen auf Polyisobutylen, mit einem Ultra-Turrax-Rührer eingemischt. Diese Lösung wird in einer Schichtdicke von etwa 100 µm auf ein gereinigtes Aluminiumblech aufgetragen. Nach Verdunsten des Lösungsmittels erhält man eine dünne elektrisch leitfähige Schicht von etwa 10 µm Stärke, die mit einer Polypyrrolfolie durch leichten Preßdruck nahezu unlösbar zu verbinden ist. Die Eigenschaften dieser Elektrode sind denen im Beispiel 1 ähnlich.

Beispiel 3

Es wird eine Lösung aus 9 Gew.-Teilen Polyisobutylen mit dem Molekulargewicht 40 000 g/mol, 1 Gew.-Teil Polyisobutylen mit dem Molekulargewicht 200 000 g/mol und 90 Gew.-Teilen Toluol hergestellt. Dieser Polymerlösung werden 20 Gew.-Teile Ruß, bezogen auf Polyisobutylen, zugemischt. Die Lösung wird auf das Blech einer Nickel-Chrom-Legierung aufgetragen. Nach dem Verdunsten des Lösungsmittels wird die Polypyrrolfolie aufgepreßt. Die geringe Zugabe der hochmolekularen Komponente führt zu einer verstärkten Haftwirkung. In Propylencarbonat konnte keine Lockerung des Verbundes beobachtet werden.

Beispiel 4

Es wird eine Lösung aus 10 Gew.-Teilen eines Ethylenpolymerisates, das Acrylsäuregruppen und Acrylsäuretertiärbutylestergruppen enthält und einen Meltindex zwischen 6 und 8 g/10 min hat, in 90 Gew.-Teilen Xylol bei 80°C hergestellt. In diese Lösung werden 30 Gew.-Teile Ruß, bezogen auf das Polymer, eingearbeitet, der eine mittlere Teilchengröße von 20 µm hat. Diese Lösung wird auf ein etwa 100°C warmes Aluminiumblech aufgebracht, das nach Abdampfen des Lösungsmittels mit einer Polypyrrolfolie unter Druck verbunden wird. Die Leitfähigkeit der Klebeschicht liegt um 1 S/cm. Die Haftfestigkeit des Verbundes ist ausgezeichnet. In verschiedenen aprotischen Lösungsmitteln, wie sie in der Batterietechnik üblich sind, wird kein Auflösen der Verbindung über mehrere Wochen beobachtet. Selbst die beim Zyklisieren des Polypyrrols eintretende Volumenänderung der Polymerfolie hat keine merkliche Verschlechterung der mechanischen Eigenschaften des Verbunds zur Folge.

## Beispiel 5

Der Leitruß aus Beispiel 4 wird in das beschriebene Ethylencopolymere, das Carboxylgrulppen enthält, im Zustand der Schmelze bei einer Temperatur zwischen 150 und 200°C mit Hilfe einer Knetvorrichtung eingemischt. In Abhängigkeit von der Rußkonzentration sind verschiedene Leitfähigkeiten des gefüllten Polymeren einstellbar. Die rußgefüllte Schmelze wird auf ein vorgewärmtes Metallblech aufgestrichen. Anschließend wird eine Polypyrrolfolie unter Druck aufgepreßt. Die Eigenschaften des Verbundes entsprechen denen der Elektrode im Beispiel 1.

## Patentansprüche

1. Verbundelektrode, deren aktives Elektrodenmaterial ein elektrochemisch be- und entladbares Polymeres enthält und einen damit mittels eines Klebstoffs verbundenen Ableiter, wobei der Klebstoff eine darin eingelagerte feinteilige elektrisch leitfähige Substanz enthält.

2. Verbundelektrode nach Anspruch 1, dadurch gekennzeichnet, daß das elektrochemisch be- und entladbare Polymere konjugierte Doppelbindungen enthält.

3. Verbundelektrode nach Anspruch 1, dadurch gekennzeichnet, daß das elektrochemisch be- und entladbare Polymere ein Pyrrol- oder Thiophen--Polymeres ist.

4. Verbundelektrode nach Anspruch 1, dadurch gekennzeichnet, daß der Ableiter aus einem Leichtmetall doer einer Leichtmetall-Legierung besteht, die unter dem verwendeten elektrochemischen Potential stabil ist.

5. Verbundeleketrode nach Anspruch 1, dadurch gekennzeichnet, daß der Ableiter aus Aluminium oder einer Aluminiumlegierung besteht.

6. Verbundelektrode nach Anspruch 1, dadurch gekennzeichnet, daß die elektrisch leitfähige feinteilige Substanz im verwendeten elektrochemischen Potential stabil ist.